# EUROPEAN PATENT APPLICATION

(11) **EP 4 737 751 A1**
(43) Date of publication of application: **06.05.2026**
(21) Application number: 24209474.6
(22) Date of filing: 29.10.2024
(51) Int. Cl.: F16C 17/02, F16C 29/02, F16C 32/06, F16C 33/10, F16C 17/04

(54) **FLUID BEARING ARRANGEMENT, MANUFACTURING METHOD THEREFORE AND ELECTRICAL MACHINE COMPRISING A FLUID BEARING ARRANGEMENT**

(71) Applicant: Hagnesia AB, 438 54 Hindås (SE)
(72) Inventor: Hagnestål, Anders, 438 54 Hindås (SE); Keijser, Mårten, 811 62 Sandviken (SE); Hallberg, Daniel, 430 80 Asperö (SE); Skagerlind, Henrick, 517 91 Bollebygd (SE)
(74) Representative: AWA Sweden AB

(57) **Abstract**

A fluid bearing arrangement (9) comprises a first member (10), a second member (20), a pressurized-fluid source connection (31) and a fluid distribution channel network (32). The second member is arranged movable relative to the first member in a predetermined motion direction (40). A first side (11) of the first member have protrusions (13) facing a first side (21) of the second member. A distance (d) between the protrusions and the first side of the second member is smaller than an average distance (D). The first side protrusions encircle a first side first and second area (15, 16). The fluid distribution channel network connects the pressurized-fluid source connection to a respective pocket (42) of the first side first and second areas by means of connection channels (38), comprising a respective flow restriction (34). A mean offset of the first side first and second areas, transverse to the predetermined motion direction.

## Description

### TECHNICAL FIELD

The present technology relates in general to fluid bearing arrangements and manufacturing thereof and in particular to fluid bearing arrangements suitable for electrical machines.

### BACKGROUND

The concept of electrical machines is well known and the first types of electrical machines such as the induction machine and the synchronous machine that were invented in the late 19:th century are still very important in the industry today. Electric machines generally comprise one movable part, typically but not restricted to a rotor or a translator, and an opposite part, typically a stator. These parts are separated by an air-gap, which separates the movable part and the opposite part. At least one of the parts, typically the stator, also has an electric winding which can carry an electric current.

In most electrical machines, there are magnetic attraction forces between the movable part and the opposite part, typically a stator. Thereby, means of securing the position of the movable part relative to the opposite part is required for safe operation of the electrical machine, otherwise the movable part may come in contact with the opposite part causing damage, friction and wear.

To provide such means, most electrical machines, especially rotating machines, have a movable part that is attached to a shaft which in turn is supported by two bearings. This is a simple and robust solution, that works well for stiff constructions that are manufactured with sufficient precision to maintain the air-gap distance between the opposite part and the movable part. Also other bearing configurations are possible for both rotating and linear machines, where many of them still rely on having stiff structures to maintain the air-gap distance.

There are also machines that have bearings within the air-gap itself. Thereby, the magnetic attraction forces between the movable part and the opposite part are counteracted more locally within the mechanical structure. This reduces the stiffness requirements on the opposite part and the movable part to maintain the separation of them at the air-gap, which in turn allows for thinner mechanical structures. It may also increase the mechanical resonance frequency, which may reduce vibration problems in the machine. The bearings can be of several different types.

A particularly suitable solution for having bearings in the air-gap is to have a fluid bearing that provides a stabilizing pressure over a large part of the air-gap area. The magnetic attraction stress in the air-gap, or rather the "fluid gap", is then counteracted by a stress from a fluid pressure that have a similar distribution as the magnetic stress. This further reduces the stiffness requirements on the movable part and the stator. If the fluid is a liquid, the fluid bearing also provides good cooling to both the stator and the movable part.

A suitable fluid bearing type to have in the air-gap is a hydrostatic or aerostatic bearing. Such bearings have a pump that provides bearing pressures even when the electrical machine is at standstill. Thereby, they always separate the moving part from the opposite part at the air-gap, which avoids wear.

A problem with the current solutions having hydrostatic or aerostatic fluid bearings at the air-gap is that although they reduce the stiffness requirements of the mechanical parts to some degree, they do not provide stability in all degrees of freedom. Thereby, stiffness towards twisting, buckling and warping at the air-gap must still be provided by the mechanical structure.

### SUMMARY

A general object of the presented technology is therefore to provide a fluid bearing suitable for being applied in the air-gap of electrical machines, where the stability of the fluid bearing enables more flexible and thinner structures in electrical machines.

The above object is achieved by methods and devices according to the independent claims. Preferred embodiments are defined in dependent claims.

In general words, in a first aspect, a fluid bearing arrangement comprises a first member, a second member, a pressurized-fluid source connection and a fluid distribution channel network. The second member is arranged movable back and/or forth relative to the first member in a predetermined motion direction. The predetermined motion direction is a linear or rotating motion direction. A first side of the first member faces a first side of the second member. The first side of the first member presents first side protrusions in a direction of the first side of the second member defining a distance between the protrusions and the first side of the second member that is smaller than an average distance between the first side of the first member and the first side of the second member. The first side protrusions encircle at least a first side first area of the first side of the first member and a first side second area of the first side of the first member. The fluid distribution channel network connects the pressurized-fluid source connection to a respective pocket in contact with the first side first area and the first side second area, defined by the first side protrusions, by means of connection channels from a common channel to a respective the pocket. Each connection channel of the connection channels comprises a respective flow restriction. A mean offset of the first side first area, in a direction transverse to the predetermined motion direction, from a predetermined motion path along the predetermined motion direction, differs from a mean offset of the first side second area, in the direction transverse to said predetermined motion direction, from the predetermined motion path along the predetermined motion direction.

In a second aspect, an electrical machine comprises a fluid bearing arrangement according to the first aspect, wherein the first member is a stator of the electrical machine and the second member is a rotor of the electrical machine.

In a third aspect, a method for manufacturing of a fluid bearing arrangement comprises forming a first member, a first side of which presenting first side protrusions. The first side protrusions encircles at least a first side first area of the first side of the first member and a first side second area of the first side of the first member. A second member is formed. A pressurized-fluid source connection is provided. A fluid distribution channel network is provided. The second member is placed allowing the second member to be movable back and/or forth relative to the first member in a predetermined motion direction. The predetermined motion direction is a linear or rotating motion direction. The second member is placed with a first side of the first member facing a first side of the second member. The first side protrusions are placed in a direction towards the first side of the second member defining a distance between the protrusions and the first side of the second member that is smaller than an average distance between the first side of the first member and the first side of the second member. The providing of a fluid distribution channel network comprises forming connection channels from a common channel to the respective pocket. Thereby, the fluid distribution channel configured is made to connect the pressurized-fluid source connection to a respective pocket in contact with the first side first area and the first side second area, defined by the first side protrusions. The providing of a fluid distribution channel network further comprises forming a respective flow constriction in each connection channel of the connection channels. The forming of a first member comprises forming of the first side protrusions to give a mean offset of said first side first area, in a direction transverse to said predetermined motion direction, from a predetermined motion path along said predetermined motion direction, that differs from a mean offset of said first side second area, in said direction transverse to said predetermined motion direction, from said predetermined motion path along said predetermined motion direction.

One advantage with the proposed technology is that stability will be provided in a direction transverse to the predetermined motion direction. The proposed technology thereby allows for thinner and more flexible mechanical structures at the bearing surfaces, since the bearing is stabilized in the transverse direction if it is being bent. Other advantages will be appreciated when reading the detailed description.

Although this may complicate the machine and may generate problems with eddy currents in the bearings, it may also allow for accommodating more air-gap area in the machine per unit volume or mass and it might be beneficial for some machine types.

### BRIEF DESCRIPTION OF THE DRAWINGS

The invention, together with further objects and advantages thereof, may best be understood by making reference to the following description taken together with the accompanying drawings, in which:
FIG. 1 illustrates schematically an electrical machine that operates by switching of magnetic flux;
FIG. 2 illustrates schematically a part of a cross-sectional view of an air-gap region of an embodiment of an electrical machine;
FIG. 3 illustrates schematically forces acting in an air-gap region of an embodiment of an electrical machine;
FIG. 4 illustrates schematically a part of a cross-sectional view of an air-gap region of an embodiment of an electrical machine with two air-gaps;
FIG. 5 illustrates schematically forces acting in an air-gap region of an embodiment of an electrical machine with two air-gaps;
FIGS. 6-12 illustrate different embodiments of pockets in fluid bearing arrangements;
FIG. 13 is a diagram illustrating the principle of pressure distribution in fluid bearing arrangements;
FIG. 14 illustrate an embodiment of serially connected pockets in fluid bearing arrangements;
FIG. 15 is an elevational view of an embodiment of an electrical machine with multiple air-gaps, with some parts broken away; and
FIG. 16 is a flow diagram of steps of an embodiment of a method for manufacturing of a fluid bearing arrangement.

### DETAILED DESCRIPTION

Throughout the drawings, the same reference numbers are used for similar or corresponding elements.

For a better understanding of the proposed technology, it may be useful to begin with a brief overview of an electrical machine that operates by switching of magnetic flux, which would benefit from improved fluid bearings.

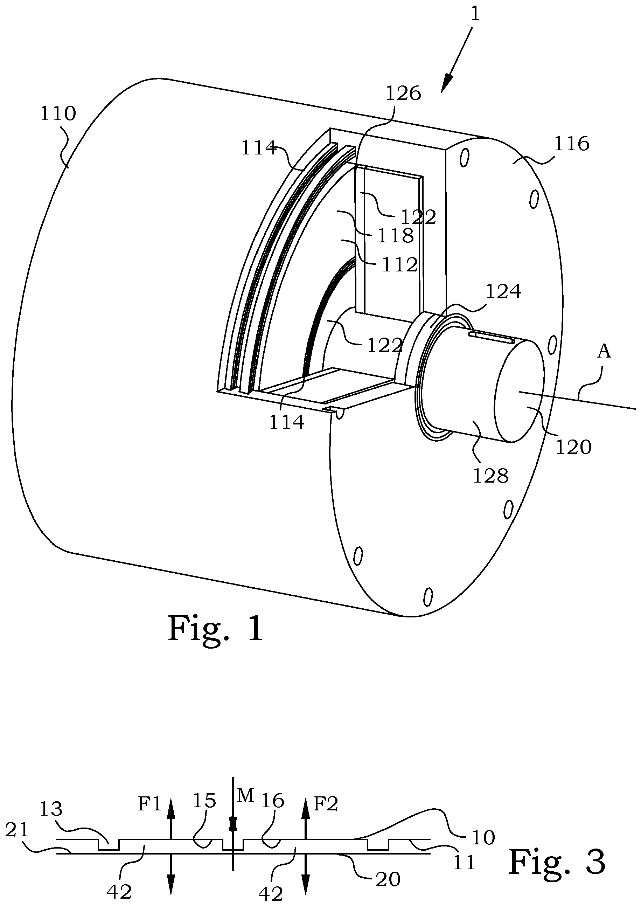

Figure 1 is a schematic drawing of an electrical machine that operates by switching of magnetic flux 1, where a part is cut away for increasing the viewability. A rotor 120 comprises a shaft 128 that is arranged rotatably with respect of a stator 110 around an axis A. A number of circular plates 122 are attached to the shaft 128 and is thereby rotated together with the shaft 128. The stator 110 comprises a number of annular discs 112, which are interleaved between the circular plates 122 of the rotor 120 along the axis A. An air-gap 126 is thereby provided between side air-gap surfaces of each pair of annular disc 112 and circular plate 122. One such side air-gap surface 118 of the stator 110 is seen in the figure. The annular discs 112 of the stator 110 are encircled by windings 114. The annular discs 112 and the circular plates 122 present spatially variable magnetic permeability at the side air-gap surfaces 118, and the magnetic reluctance through the electrical machine that operates by switching of magnetic flux 1 in the axial direction will therefore vary when the rotor 120 is rotating relative the stator 110.

If the electrical machine that operates by switching of magnetic flux 1 is a generator, a torque that is applied to rotate the rotor 120 will be counteracted by a magnetic torque that is created by alternating currents in the windings 114.

If the electrical machine that operates by switching of magnetic flux 1 is a motor, an alternating current that is applied through the windings 114 will cause the rotor 120 to rotate.

The different details of different types of electrical machine that operates by switching of magnetic flux 1 are, as such, well-known in prior art, for instance by the published international patent application WO 2020/180234 A1.

In the text that follows, a magnetic pole is an important concept. For machines that are excited by either permanent magnets or by a winding on the movable part, the mover or rotor, a pole is a magnetically excited part that is characterized by having the same magnetic polarity everywhere. Adjacent to this pole, there is another pole with the opposite polarity, and two adjacent poles form a pole pair. The magnetic flux from this pole pair normally forms a loop within the pole pair and in part also through adjacent poles, so that the flux through each pole returns in the two poles of opposite polarity that are adjacent to that pole. Typically, but not always, the poles are located on the mover or rotor.

For reluctance machines, permanent magnets are not used. Poles are instead defined by the saliency, i.e. that the magnetic reluctance experienced by the flux generated from the stator windings varies with position of the rotor or mover. The function of the poles is also different, since the poles are not a source of magnetic flux density but instead a part of a repeating geometrical pattern of permeable material. In synchronous reluctance machines, either salient poles formed by rotor or mover permeable teeth or for modern machines long-thin hole patterns through the permeable material in the mover or rotor creates a low reluctance loop between two adjacent locations of high saliency and correspondingly a high reluctance loop from the positions with non-saliency. Note that a highly permeable material often used is electrical steel. For the synchronous reluctance machine, a salient position is here defined as a pole, and two adjacent such poles with a location having non-saliency in between them forms a pole pair. In switched reluctance machines, the difference in magnetic reluctance is formed by a varying magnetic reluctance both on the mover or rotor and the stator. This varying reluctance is typically formed by having permeable teeth in the mover or rotor and the stator. The current in the stator then forms a magnetic field between the mover or rotor and the stator. At certain positions, the shear force on the mover or rotor will be in one direction, at other positions it will be in the other direction, regardless of the direction of the current, and at certain positions it will be zero. This force arises since the mover or rotor teeth strive to align with the stator teeth when excited by a magnetic field. To operate such a machine, the current in the stator is switched on and off so that one obtains a force in one direction only. Typically, one has for one phase a current in the quadrants 1 and 3 or the quadrants 2 and 4 of an electrical period, and combine a multitude of phases to get a working machine with torque or force in the right direction in all positions. A pole is then like in the synchronous reluctance machine defined as a position on the rotor where the saliency is high, i.e. where there is a tooth of a highly permeable material.

An electrical machine that operates by switching of magnetic flux operates differently than most electrical machines. The key difference is that in machines that do not operate by switching of magnetic flux, the flux loops are small and local, circling around in adjacent magnetic poles. If the winding is concentrated, each winding loop only encloses magnetic flux from approximately one pole. If the winding is distributed, the winding loops typically enclose magnetic flux from several adjacent poles, but the net magnetic flux through that winding is not larger than the flux from one pole during normal operation, since adjacent poles are of opposite polarity. For machines that operate by switching of magnetic flux, the winding encloses the magnetic flux from several adjacent poles with a simple loop, and the net flux through that winding loop is larger than the magnetic flux from one pole, typically many times larger. Machines that operate by switching of magnetic flux thereby includes machines that in the literature is called transverse flux machines, vernier hybrids, modulated pole machines, flux-switching machines, variable reluctance permanent magnet machines and some types of switched reluctance machines. To be more precise, a machine that operates by switching of magnetic flux comprises a winding loop that encloses magnetic flux from at least three adjacent poles and has a net magnetic flux from these said at least three adjacent poles through said winding loop that is larger than the magnetic flux from one pole, preferably having a winding loop that encloses magnetic flux from at least six adjacent poles and has a net magnetic flux from these said at least six adjacent poles through said winding loop that is larger than the magnetic flux from one pole and most preferably having a winding loop that encloses magnetic flux from at least ten adjacent poles and has a net magnetic flux from these said at least ten adjacent poles through said winding loop that is larger than the magnetic flux from one pole.

The energy exchange is in principle performed within the air-gaps, and in order to utilize the machine in an efficient manner, many air-gaps increases the total torque or force and also the efficiency. This also leads to that the use of solid material, through which the magnetic fields are conducted per unit of torque produced, preferably is reduced per unit of torque. A reduced amount of solid material within the machine will, however, reduce the mechanical stability of the parts closest to the air-gaps.

In a typical electrical machine that operates by switching of magnetic flux 1 according to prior art, bearings 124 are provided between the shaft 128 of the rotor 120 and the stator 110. As mentioned in the background, this is a simple and robust solution, that works well for stiff constructions that are manufactured with sufficient precision to maintain the air-gap distance between the opposite part and the movable part. However, for thin machine components, additional mechanical instabilities such as twisting, buckling and warping are difficult to prohibit by conventional bearing solutions. These bearings may also be complemented or substituted by bearings at the air-gap 126, typically hydrostatic or aerostatic fluid bearings.

The electrical machine of figure 1 is an electrical machine that operates by switching of magnetic flux. However, the ideas presented here are also applicable to other types of electrical machines.

The electrical machine of figure 1 is furthermore a rotating electrical machine, with a rotating shaft 120. However, alternative machines may also be based on a stationary shaft, encircled by a rotating structure. There may also be alternatives where both parts of the electrical machine are moving. Any kind of relative rotation may thus be utilized.

Furthermore, the relative motion may not necessarily be a rotation. An electrical machine may also operate with a relative linear motion between two parts. The present ideas are thus possible to apply to any type of electrical machine having a first member and a second member, where the second member is movable back and/or forth relative to the first member in a predetermined motion direction, where the predetermined motion direction is a linear or rotating motion direction.

In this text, an air-gap is defined as a gap between the rotor and the stator in which magnetic fields cross and generate forces, in particular the useful forces or torques required for the machine to operate. The air-gap may be filled with air or some other gas, but is sometimes also filled with a liquid.

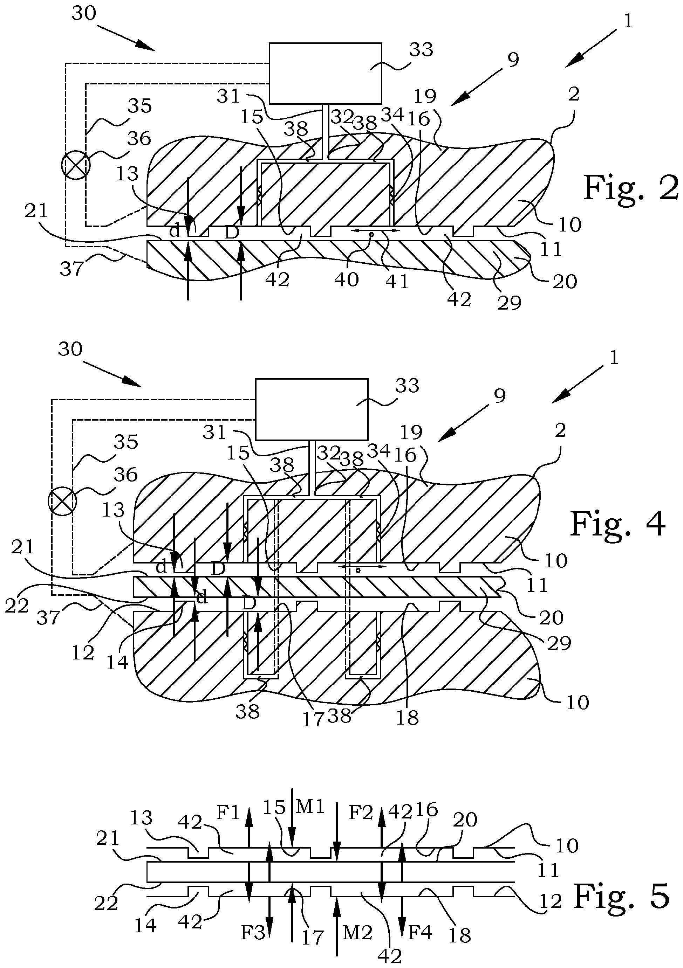

The air-gaps are generally of high importance for the operation, in particular for the operation of the electrical machines that operates by switching of magnetic flux. Figure 2 illustrates schematically a cross-sectional view of a part of an air-gap region 2 of an electrical machine, e.g. an electrical machine that operates by switching of magnetic flux 1. A first member 10 that is a part of a first machine component 19 has a first side 11. The first machine component 19 can be a stationary component, such as a stator, or a movable component, such as a rotor. A second member 20 that is a part of a second machine component 29 has also a first side 21. The second machine component 29 can be a movable component, such as a rotor, or a stationary component, such as a stator. The first side 11 of the first member 10 faces the first side 21 of the second member 20. The second member 20 is movable back and/or forth relative to the first member 10 in a predetermined motion direction. In the figure, this predetermined motion direction is perpendicular to the plane of the figure. The motion is relative, i.e. the second member 20 may move and the first member 10 may be stationary, or the second member 20 may be stationary and the first member 10 may move, or both the second member 20 and the first member 10 may move. The predetermined motion direction is a linear or rotating motion direction, depending on whether the electrical machine is a rotating or linearly moving machine.

A fluid bearing arrangement 9 is provided in the electrical machine, utilizing the first member 10 and the second member 20. The first side 11 of the first member 10 presents first side protrusions 13 in a direction towards the first side 21 of the second member 20. A distance d is thereby defined between the first side protrusions 13 and the first side 21 of the second member 20. This distance d is smaller than an average distance D between the first side 11 of the first member 10 and the first side 21 of the second member 20. The first side protrusions 13 encircle at least a first side first area 15 of the first side 11 of the first member 10 and a first side second area 16 of the first side 11 of the first member 10. Pockets 42 between the first side first area 15 and the first side 21 of the second member 20, and between the first side second area 16 and the first side 21 of the second member 20, are communicating with other volumes or the surroundings via the narrow slits defined by the distance d. The first side protrusions 13 thus constitute flow restrictions for fluids flowing in and/or out these pockets 42.

The first side protrusions 13 are illustrated as sharp rectangular-shaped features. However, the first side protrusions 13, and any other protrusions discussed further below, may be of other shapes as well. The surfaces of the protrusions facing the pockets 42 may as non-exclusive example e.g. be sloping and/or curved. The shape can be arbitrary as long as the first side protrusions 13 provides the above-mentioned flow restrictions for fluids flowing in and/or out the pockets 42.

A mean offset of the first side first area 15, in a direction transverse 41 to the predetermined motion direction, i.e. within the plane of the figure, from a predetermined motion path 40, indicated in the figure by a small circle, along the predetermined motion direction, differs from a mean offset of the first side second area 16, in the direction transverse 41 to the predetermined motion direction, from the predetermined motion path 40 along the predetermined motion direction. In the figure, this is seen as the first side first area 15 is situated to the left of the first side second area 16. In other words, with respect to the predetermined motion path 40, the first side first area 15 and the first side second area 16 are in average situated at different locations in the direction transverse 41 to the predetermined motion direction.

A bearing fluid system 30 comprises a pressurized-fluid source connection 31. This pressurized-fluid source connection 31 is in this embodiment connected to a pressurized-fluid source 33. The bearing fluid system 30 further comprises a fluid distribution channel network 32. In this embodiment, the fluid distribution channel network 32 is provided within the first member 10.

The fluid distribution channel network 32 connects the pressurized-fluid source connection 31 to a respective pocket 42 in contact with the first side first area 15 and the first side second area 16, defined by the first side protrusions 13, by means of connection channels 38 from a common channel to a respective pocket 42. Each connection channel 38 of the connection channels comprises a respective flow restriction 34.

The flow restriction 34 can be of different kinds, but will always result in a pressure drop. The flow restriction 34 can simply be a part of the connection channel 38 having a cross-sectional area being narrower than the average width of the connection channel 38. The flow restriction 34 can operate with a laminar flow, e.g. caused by capillary forces. In such a case, the flow restriction 34 will experience the same temperature dependence of the viscosity as is experienced in the rest of the bearing arrangement, which typically reduces temperature dependencies of the bearing action. The flow restriction 34 can also be an arrangement causing a turbulent flow. Turbulent flow restrictions 34 typically give a stiffer bearing action. This type of flow restrictions 34 is typically easier to manufacture, but is typically less linear compared to laminar flow restrictions.

With this configuration, a bearing function stabilizing all parts of the air-gap region 2 can be accomplished. With reference to Figure 3, magnetic flows passing the air-gap between the first side 11 of the first member 10 and the first side 21 of the second member 20 typically causes an attractive magnetic force M between the first member 10 and the second member 20. A part of this force may be counteracted by the stiffness of the first member 10 and the second member 20 and the mounting thereof. However, the magnetic force M may also induce a change in distance between the first member 10 and the second member 20 as well as twisting, buckling and warping of the first member 10 and the second member 20. By introducing a pressurized fluid into the pockets 42 and having the flow restrictions of the first side protrusions 13, a pressure level is built up within the pockets 42. This pressure level exerts a certain fluid force F1, F2 onto the first member 10 and the second member 20, counteracting the magnetic force M. By having connection channels 38 with respective flow restriction 34, each pocket 42 may experience different pressure levels, depending on how the first member 10 and the second member 20 are moved or distorted in the corresponding parts. Twisting, buckling and warping may thereby be counteracted efficiently.

If there were no difference between said mean offset of said first member first side first area and said first member first side second area, the fluid bearing will control the average distance between the said first member and said second member, but not the tilt angle between said first member and said second member. Thereby, the first member first side and the second member first side may come in physical contact with each other despite that the average distance between said first member first side and said second member first side. This must instead be provided by the mechanical stiffness of the structure. The arrangements here above solve these problems.

If the first member 10 and the second member 20 come closer to each other, the first side protrusions 13 partly closes the gap towards the second member 20. This increases the flow restriction at the first side protrusions 13 which causes a build-up of a high pressure within the pockets 42, which in turn increase the forces tending to increase the distance between the first member 10 and the second member 20 again. Analogously, if the first member 10 and the second member 20 are separated further from each other, the gap at the protrusions 13 opens up and the pressure within the pockets 42 is reduced, which reduces the counteracting force.

In a few special electrical machines and in a few electrical machines that operates by switching of magnetic flux, the different members of the movable or stationary components may be very thin and bearing arrangements may be necessary on both sides. The first machine component 19 (Fig. 2) may have more than one first member 10 sections and/or a first member 10 having bearing arrangements on both sides. Likewise, the second machine component 29 (Fig. 2) may have more than one second member 20 sections and/or a second member 20 having bearing arrangements on both sides. For instance, a number of discs of first member 10 sections and a number of discs of second member 20 sections may be interleaved, c.f. Fig. 1, with each other, separated by air-gaps in which bearing arrangements are provided.

An embodiment of a two-side fluid bearing arrangement is schematically illustrated in Figure 4, where both sides of a first member 10 disc are used. In alternative embodiments, two-side fluid bearing arrangements on both sides of a second member 20 disc may be used.

A second side 12 of the first member 10 faces a second side 22 of the second member 20, opposite to said first side 21. The second member 20 is thereby in this embodiment placed between two inwards directed surfaces of the first member 10. In analogy with the one-sided bearing, the second side 12 of the first member 10 presents second side protrusions 14 in a direction of the second side 22 of the second member 20 defining a distance d between the second side protrusions 14 and the second side 22 of the second member 20 that is smaller than an average distance D between the second side 12 of the first member 10 and the second side 22 of the second member 20.

The second side protrusions 14 encircle at least a second side first area 17 of the second side 12 of the first member 10 and a second side second area 18 of the second side 12 of the first member 10. The fluid distribution channel network 32 further connects the pressurized-fluid source connection 31 to a respective pocket in contact with the second side first area 17 and the second side second area 18, defined by the second side protrusions 14, by means of the connection channels 38 from a common channel to a respective pocket. Also here, a mean offset of the second side first area 17, in a direction transverse to the predetermined motion direction, from a predetermined motion path along the predetermined motion direction, differs from a mean offset of the second side second area 18, in the direction transverse to the predetermined motion direction, from the predetermined motion path along the predetermined motion direction.

With this configuration, a bearing function stabilizing all parts of the air-gap region 2 can be accomplished, in particular for a narrow second member 20. With reference to Figure 5, magnetic flows passing the air-gap between the first side 11 of the first member 10 and the first side 21 of the second member 20 typically causes an attractive magnetic force M 1 between the first member 10 and the second member 20, and at the same time magnetic flows passing the air-gap between the second side 22 of the second member 20 and the second side 12 of the first member 10 typically causes an attractive magnetic force M2 between the first member 10 and the second member 20. A part of this force may be counteracted by the stiffness of the first member 10 and the second member 20 and the mounting thereof. However, the magnetic forces M1, M2 may also induce a change in distance between the first member 10 and the second member 20 as well as twisting, buckling and warping of the first member 10 and the second member 20. By introducing a pressurized fluid into the pockets 42 on both sides of the second member 20 and having the flow restrictions of the first side protrusions 13 and the flow restrictions of the second side protrusions 14, a pressure level is built up within the pockets 42. This pressure level exerts a certain fluid force F1, F2, F3, F4 onto the first member 10 and the second member 20, counteracting the magnetic force M. By having connection channels 38 with respective flow restriction 34, each pocket 42 may experience different pressure levels, depending on how the first member 10 and the second member 20 are moved or distorted in the corresponding parts. Twisting, buckling and warping may thereby be counteracted efficiently by having compensation bearing actions on both sides of the narrow second member 20. Since all the pockets 42 have their individual flow restrictions 34, they will act mainly separately, taking care of the local bearing requirements.

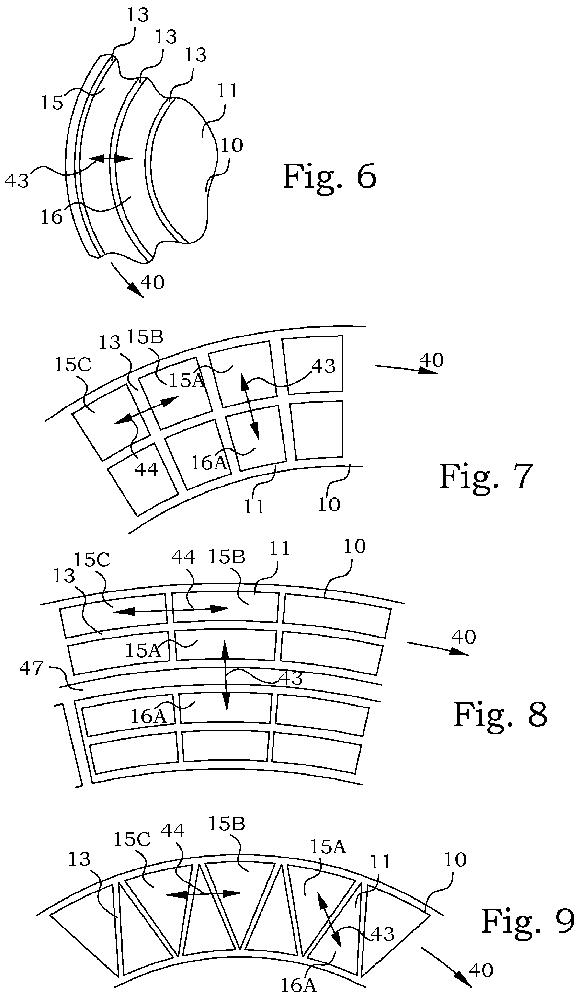

The provision of the first and second areas at different average position relative to the motion path, gives a possibility to control the forces applied on the different parts transverse to the motion path of the first and second members. Figure 6 schematically illustrates a part of an embodiment of a first side 11 of a first member 10 as seen perpendicular to the first side 11. The first member 10 of this embodiment is intended to be used for a rotation motion. First side protrusions 13 are here provided as circles, defining the first side first area 15 and the first side second area 16 as annularly shaped areas. A predetermined motion path 40 can for instance be defined as following the middle first side protrusion 13. It is here seen that in a direction transverse to the predetermined motion path 40, the average position of the first side first area 15 and the first side second area 16 differs by a distance illustrated by the arrow 43. The pressure conditions at the inner area may be different from the pressure conditions at the outer area, e.g. as a result of radial buckling. This will be counteracted by the separated area.

In preferred embodiments, these ideas are also used for adapting applied bearing forces also along the motion path. Figure 7 illustrates a part of another embodiment of a first side 11 of a first member 10 as seen perpendicular to the first side 11. First side protrusion 13 are here defining a number of more or less square areas. Areas 15A and 16A are provided with different average position relative a predetermined motion path 40 as expressed by the arrow 43. Differences in the bearing forces at different radial positions can thereby be provided, in accordance with the discussions above. However, when considering areas 15B and 15C, they are provided at the same average radial position relative the predetermined motion path 40. Instead, the positions in the tangential direction, i.e. along the predetermined path 40 differ, as illustrated by the arrow 44. It is therefore also possible to provide different bearing forces at different tangential positions, counteracting further member distortions.

In other words, in one embodiment, the first side protrusions further encircle at least a first side third area of the first side of the first member. The fluid distribution channel network further connects the pressurized-fluid source connection to a respective pocket in contact with the first side third area, defined by the first side protrusions, by means of the connection channels from the common channel to the pocket in contact with the first side third area. A center of gravity of the first side third area, differs, in a direction along the predetermined motion direction, from a center of gravity of the first side first area.

In embodiments with double-sided bearings, it is further preferred that the second side protrusions further encircle at least a second side third area of the second side of the first member. The fluid distribution channel network further connects the pressurized-fluid source connection to a respective pocket in contact with the second side third area, defined by the second side protrusions, by means of the connection channels from the common channel to the pocket in contact with the second side third area. A center of gravity of the second side third area, differs, in a direction along the predetermined motion direction, from a center of gravity of the second side first area.

The areas defined by the protrusions can be designed in very many different ways and the number of areas can indeed be large. The areas are preferably spread in the radial as well as the tangential direction, if a rotating motion is used, and in the translation direction and transverse to the translation direction for linear motion machines.

Figure 8 illustrates a part of another embodiment of a first side 11 of a first member 10 as seen perpendicular to the first side 11. Here, four rows of areas are provided in the radial direction, and there are also a large number of columns provided in the tangential direction. Here additional escape routes 47 are provided in order to assist in connecting the different areas to the surroundings.

Further, if there are multiple areas on the first member first side having different mean offsets from the predetermined motion path, similar to what is shown in Fig. 8, these several rows of pockets also prevent the first and second members to bend and thereby prevents them to come in contact with each other due to the bending.

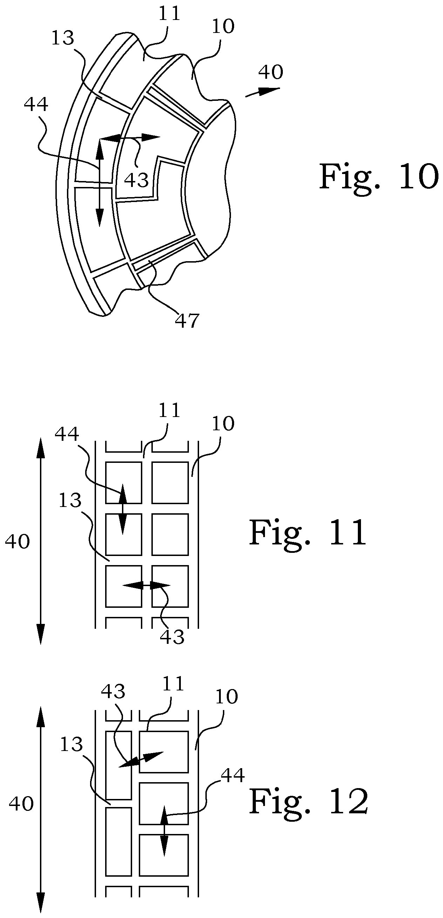

The areas may overlap with each other in the radial and/or the tangential direction (and analogously for linear machines) as long as the average distances differ radially and/or tangentially. One example is illustrated in Figure 9. Also more elaborate shapes and arrays of areas may be employed, as e.g. is illustrated in Figure 10. Here additional escape routes 47 are provided in order to assist in connecting the different areas to the surroundings. Figure 11 illustrates a part of another embodiment of a first side 11 of a first member 10 as seen perpendicular to the first side 11 for a linear machine. Figure 12 illustrates a further embodiment of a linear application, where the number of areas in different transverse positions are different.

The provision of the pressurized fluid may be performed in different ways. Returning to Figure 2, this embodiment has a pressurized-fluid source 33 connected to the pressurized-fluid source connection 31. This pressurized-fluid source 33 may be a pressure tank of pressurized fluid. However, if the fluid is a more or less incompressible liquid, such solutions are not believed to be practically useful.

In another embodiment, the pressurized-fluid source 33 is or comprises a pump 36 and the fluid distribution channel network further comprises return channels 35 from positions outside the first side protrusions 13 to the pump 36. Different kinds of fluid collecting arrangements 37 may be employed. As seen in Figure 4, the same principles are valid also for a two-sided design, where the return channels 35 also are connected to positions outside the second side protrusions 14.

In this way, a pressurized fluid is provided to the pressurized-fluid source connection 31. The fluid flow between the pressurized-fluid source connection 31 and the positions outside the first and/or second protrusions 13, 14, where the fluid is expected to be under a pressure approximately equal to atmospheric pressure, is controlled by the flow restrictions 34 and by the slits between the first and/or second protrusions 13, 14 and the second element 20. The pressure in the pockets 42 depends on a ratio between the flow restrictions 34 and the flow restrictions caused by the flow passed the first and/or second protrusions 13, 14.

A small passage between the first and/or second protrusions 13, 14 and the opposed surface causes difficulties for the fluid to pass, i.e. it constitutes a high flow restriction. The flow restriction 34 in the connection channels 38 feeding fluid to the pocket inside the small passage is constant and the pressure drop from the pressurized-fluid source 33 to the position outside the first and/or second protrusions 13, 14 will adapt to keep the same fluid flow through the entire path. This means that there has to be a high pressure drop for the small passage at the first and/or second protrusions 13, 14 and a smaller pressure drop at the flow restriction 34, which in turn leads to that the pressure in the pocket increases. This increased pressure increases the separating forces on the surfaces of the pocket, tending to increase the small passage.

Analogously, if the passage between the first and/or second protrusions 13, 14 and the opposed surface is large, the pressure drop needed to obtain the fluid flow is small and the pressure in the pocket inside the passage will therefore also be small. The pressure drop over the flow restriction 34 now instead is higher. The low pressure in the pocket applies a lower separating force on the surfaces of the pocket and the magnetic forces may tend to reduce the distance.

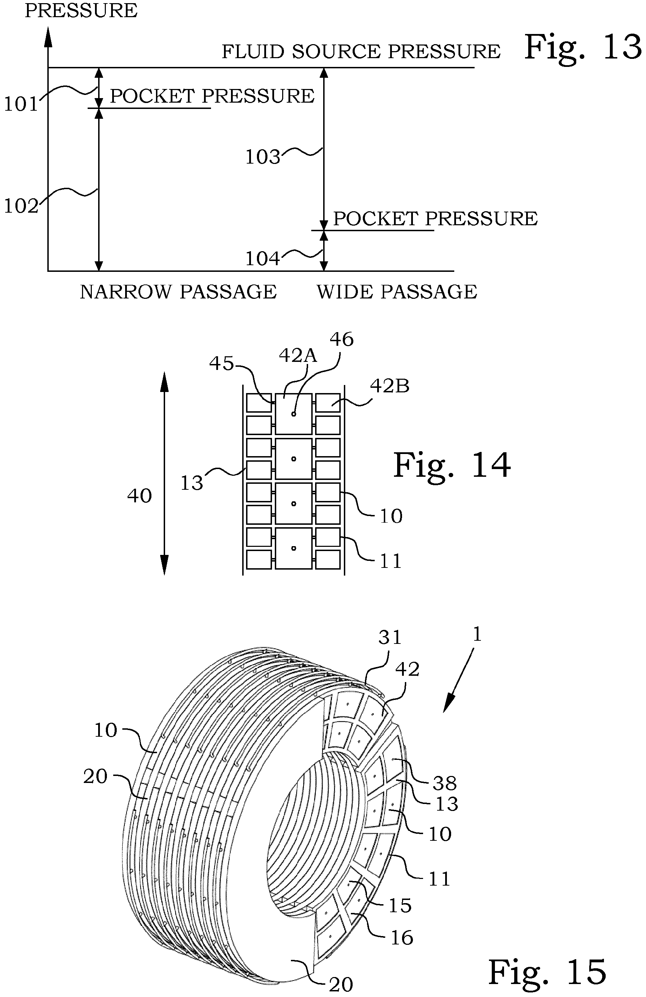

The different situations are illustrated in the diagram of Figure 13. With a narrow passage by the protrusions, a restriction of the flow restriction 34 causes a small pressure drop 101 compared to a large pressure drop 102 caused by the narrow passage. With a wide passage, a restriction of the flow restriction 34 causes a large pressure drop 103 compared to a small pressure drop 104 caused by the narrow passage.

The provision of fluid flows through each of the pockets formed by the areas defined by the first and/or second protrusions 13, 14, the pressure in each pocket will adapt to the local geometrical conditions and act as a local fluid bearing. The flow restriction 34 and the passage at the first and/or second protrusions 13, 14 together control the local bearing actions automatically. In order to achieve a reasonably accurate bearing action, the restriction level of the flow restriction 34 should be in the same order of magnitude as the restriction at the first and/or second protrusions 13, 14 when the first and second members 10, 20 are positioned in an intended relative operation position.

In other words, in one embodiment, the flow restrictions in the connection channels are within 25-400% of a total restriction for flows past the protrusions for a respective area when first and second members are in intended positions relative to each other.

The connection channels 38 feeding fluid to the pockets 42 are preferably provided through the first member 10. Since the appropriate flow restrictions are determined by design features, the flow restrictions 34 may be designed together with and preferably integrated into the first member 10. In other words, preferably, the flow restrictions 34 in the connection channels 38 and at least a part of the connection channels 38 are provided in the first member 10.

In a preferred embodiment, the connection channels 38 feeding fluid to the pockets 42 are preferably separate connection channels 38 having their respective flow restrictions 34.

However, in alternative embodiments, the connection channels 38 may partly comprise sections that are common to more than one pocket. Figure 14 illustrated one embodiment of a first side 11 of a first member 10 as seen perpendicular to the first side 11. Here, a common connection channel portion 46 provides fluid into a middle pocket 42A. This common channel portion 46 may have a flow restriction determining the pressure conditions in the middle pocket. The first side 11 of the first member 10 in this embodiment has additionally side pockets 42B. These side pockets 42B do not have any direct separate connection channel, but are provided by pressurized fluid through the middle pocket 42A. The middle pocket 42A and each of the side pockets 42B are thus connected serially. Channel features 45 may be provided in the protrusions 13 in order to define the magnitude of a flow restriction between the middle pocket 42A and the side pockets 42B. The pressure in the side pockets 42B will thereby be lower than in the middle pocket 42A. However, the pressure in the different side pockets 42B may differ, depending on the distances between the second member and the protrusions 13 around the respective side pockets 42B. The side pockets 42B may therefore provide different bearing force magnitudes at different parts of the air-gap.

In a preferred embodiment, the first side 21 and second side 22, if any, of the second member 20 are flat. This is also illustrated in the figures. This facilitates the design and mounting. However, this is not a necessity in order to achieve the basic technical effect, and the surfaces of the second member 20 may in other embodiments have a non-flat design. This may e.g. be of interest if flow channels from pockets far from any outer edge have to be provided.

The above-described fluid bearing arrangement can be applied in many different applications where a small distance is to be kept approximately constant and where external forces are applied tending to close the distance. In particular when the elements defining the small distance are thin and may be exposed for small deformations, the provision of local fluid bearing action is useful.

A typical application in which such a fluid bearing arrangement is advantageously applied is an electrical machine, which has been used as a model application above. Here, the external forces are typically caused by magnetic features and magnetic material is typically comprised in the different elements. In an electrical machine, there is typically one moving element and one non-moving element. In a rotating machine, there is a rotor and a stator. In a linear machine, there is a moving element and a stationary element. Since the first element in the fluid bearing arrangement comprises fluid arrangements, it is advantageously if the first element is the non-moving part of the machine.

In other words, an electrical machine can advantageously comprise a fluid bearing arrangement according to the discussions above, wherein the first member is a non-moving part of the electrical machine, and the second member is a moving part of the electrical machine. For a rotating machine, the stator is preferably the first member, and the rotor is preferably the second member.

In one preferred embodiment, the electrical machine is a flux switching machine.

In many electrical machines, there are multiple air-gaps and this may be achieved by arranging multiple moving members in close positions to multiple stationary members. The above fluid bearing principles are easily applied also to such designs. In other words, in one embodiment, an electrical machine comprises multiple second members provided with respective air gaps relative to the first member.

One example of an electrical machine 1 is illustrated in Figure 15. A part of the machine is broken away in order to increase the visibility and the understanding of the design. In this embodiment the electrical machine 1 comprises multiple plates of a second member 20 provided with respective air gaps relative to surfaces of the first member 10. In this embodiment, the second members 20 are parts of a rotor and the first member 10 is a stator. Each surface of the first member 10 is provided with areas 15, 16 defining pockets that can be pressurized through the fluid distribution channel network 32. End openings of the connection channel 38 are visible in the areas 15, 16. Each first member surface presenting pockets 42 faces a plane side of one rotor plate. In this way, the magnetic flow through the electrical machine passes a large number of air-gaps, where a conversion to/from electrical energy can be performed. It is thus advantageous that the plates of the first 10 and second 20 members are narrow. The disadvantage of having narrow plates, i.e. the risk for twisting, buckling and warping at the air-gap, is counteracted by introducing the fluid bearing arrangement according to the present ideas.

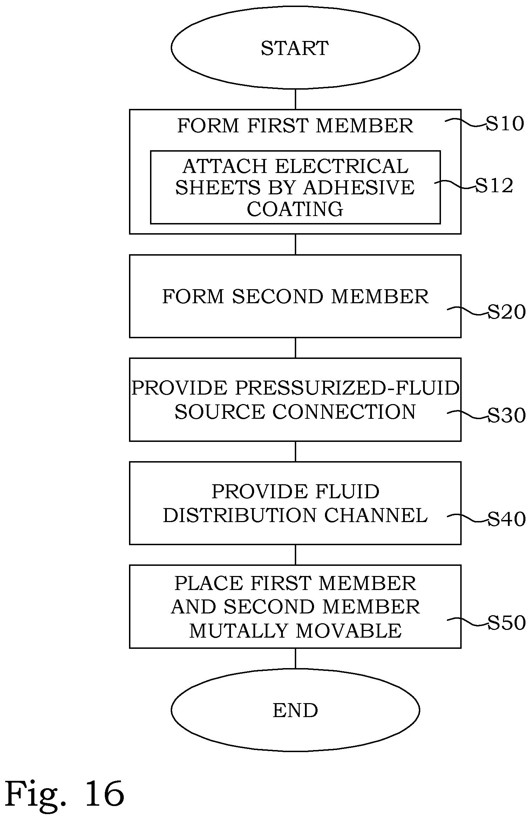

Figure 16 is a flow diagram of steps of an embodiment of a method for manufacturing of a fluid bearing arrangement. In step S 10, a first member is formed. A first side of the first member presents first side protrusions. The first side protrusions encircle at least a first side first area of the first side of the first member and a first side second area of the first side of said first member. In step S20, a second member is formed. In step S30 a pressurized-fluid source connection is provided. In step S30, a fluid distribution channel network is provided. This is preferably performed at least partly together with the formation of the first member in step S10.

In step S50, the first and second members are placed mutually movable. In other words, the second member is placed allowing the second member to be movable back and/or forth relative to the first member in a predetermined motion direction. The predetermined motion direction is a linear or rotating motion direction. The second member is placed with a first side of the first member facing a first side of the second member. The first side protrusions are placed in a direction towards the first side of the second member defining a distance between the protrusions and the first side of the second member that is smaller than an average distance between the first side of the first member and the first side of said second member.

The step S40 of providing of a fluid distribution channel network comprises forming connection channels from a common channel to a respective pocket. This makes the fluid distribution channel configured to connect the pressurized-fluid source connection to a respective pocket in contact with the first side first area and the first side second area, defined by the first side protrusions. The step S40 of providing a fluid distribution channel network further comprises forming a respective flow restriction in each connection channel of the connection channels.

The step S10 of forming a first member comprises forming of the first side protrusions to give a mean offset of the first side first area, in a direction transverse to the predetermined motion direction, from a predetermined motion path along the predetermined motion direction, that differs from a mean offset of the first side second area, in the direction transverse to the predetermined motion direction, from the predetermined motion path along the predetermined motion direction.

In many applications, for instance where magnetic fields are employed, the first and second members are to be magnetic, at least to a part. One preferred way to form at least the first member is to use sheets of magnetically highly permeable material. Such sheets are readily available provided with adhesive surface coatings. By forming the sheets in desired ways, stack them into stacks of sheets and heating them until the adhesive surface coating of neighbouring sheets cross-binds, a first member can easily be provided. Also the parts of the fluid distribution channels provided in the first element may be produced in such a way.

In other words, in one preferred embodiment, the step S10 of forming the first member comprises a step S12 of attaching electrical sheets having adhesive coating to form at least parts of the first member forming the pockets.

A bearing arrangement produced in this way has thereby the property that at least parts of the first member forming the pockets are formed by magnetically highly permeable material sheets attached by adhesive coating.

"Magnetically highly permeable material" is in the present disclosure defined as materials having a relative magnetic permeability of more than 50 at a magnetic flux density of more than 0.2 Tesla.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. A fluid bearing arrangement (9), comprising:
- a first member (10); and
- a second member (20), movable back and/or forth relative to said first member (10) in a predetermined motion direction (40), said predetermined motion direction (40) being a linear or rotating motion direction;
- a pressurized-fluid source connection (31);
- a fluid distribution channel network (32);
wherein a first side (11) of said first member (10) faces a first side (21) of said second member (20);
wherein said first side (11) of said first member (10) presents first side protrusions (13) in a direction of said first side (21) of said second member (20) defining a distance (d) between said first side protrusions (13) and said first side (21) of said second member (20) that is smaller than an average distance (D) between said first side (11) of said first member (10) and said first (21) side of said second member (20);
wherein said first side protrusions (13) encircle at least a first side first area (15) of said first side (11) of said first member (10) and a first side second area (16) of said first side (11) of said first member (10);
wherein said fluid distribution channel network (32) connects said pressurized-fluid source connection (31) to a respective pocket (42) in contact with said first side first area (15) and said first side second area (16), defined by said first side protrusions (13), by means of connection channels (38) from a common channel to a respective said pocket (42);
wherein each connection channel (38) of said connection channels (38) comprises a respective flow restriction (34);
wherein a mean offset of said first side first area (15), in a direction transverse to said predetermined motion direction (40), from a predetermined motion path along said predetermined motion direction (40), differs from a mean offset of said first side second area (16), in said direction transverse to said predetermined motion direction (40), from said predetermined motion path along said predetermined motion direction (40).

2. The fluid bearing arrangement according to claim 1, **characterized in that**
said first side protrusions (13) further encircles at least a first side third area (15C) of said first side (11) of said first member (10);
wherein said fluid distribution channel network (32) further connects said pressurized-fluid source connection (31) to a respective pocket (42) in contact with said first side third area (15C), defined by said first side protrusions (13), by means of said connection channels (38) from said common channel to said pocket (42) in contact with said first side third area (15C);
wherein a center of gravity of said first side third area (15C), differs, in a direction along said predetermined motion direction (40), from a center of gravity of said first side first area (15B).

3. The fluid bearing arrangement according to claim 1 or 2, **characterized in that**
a second side (12) of said first member (10) faces a second side (22) of said second member (20), opposite to said first side (11);
wherein said second side (12) of said first member (10) presents second side protrusions (14) in a direction of said second side (22) of said second member (20) defining a distance (d) between said protrusions(14) and said second side (22) of said second member (20) that is smaller than an average distance (D) between said second side (12) of said first member (10) and said second side (22) of said second member (20);
wherein said second side protrusions (14) encircle at least a second side first area (17) of said second side (12) of said first member (10) and a second side second area (18) of said second side (12) of said first member (10);
wherein said fluid distribution channel network (32) further connects said pressurized-fluid source connection (31) to a respective pocket (42) in contact with said second side first area (17) and said second side second area (18), defined by said second side protrusions (14), by means of said connection channels (31) from a common channel to a respective said pocket (42);
wherein a mean offset of said second side first area (17), in a direction transverse to said predetermined motion direction (40), from a predetermined motion path along said predetermined motion direction (40), differs from a mean offset of said second side second area (18), in said direction transverse to said predetermined motion direction (40), from said predetermined motion path along said predetermined motion direction (40).

4. The fluid bearing arrangement according to claim 3, **characterized in that**
said second side protrusions (14) further encircles at least a second side third area of said second side (12) of said first member (10);
wherein said fluid distribution channel network (32) further connects said pressurized-fluid source connection (31) to a respective pocket (42) in contact with said second side third area, defined by said second side protrusions (14), by means of said connection channels (31) from said common channel to said pocket (42) in contact with said second side third area;
wherein a center of gravity of said second side third area, differs, in a direction along said predetermined motion direction, from a center of gravity of said second side first area (17).

5. The fluid bearing arrangement according to any of the claims 1 to 4, **characterized by** a pressurized-fluid source (33) connected to said pressurized-fluid source connection (31), wherein said pressurized-fluid source (33) is a pump and said fluid distribution channel network (32) further comprises return channels (35) from positions outside said first side protrusions (13) and said second side protrusion (14) to said pump.

6. The fluid bearing arrangement according to any of the claims 1 to 5, **characterized in that** said flow restrictions (34) in said connection channels (38) is within 25-400% of a total restriction for flows past said protrusions (13, 14) for a respective area when first (10) and second (20) members are in intended positions relative to each other.

7. The fluid bearing arrangement according to any of the claims 1 to 6, **characterized in that** said connection channels (38) are separate connection channels with separate flow restrictions (34) for each one of said pockets (42) or at least two of said connection channels (38) share a common channel and a common part flow restriction.

8. The fluid bearing arrangement according to any of the claims 1 to 7, **characterized in that** said flow restrictions (34) in said connection channels and at least a part of said connection channels (38) are provided in said first member (10).

9. The fluid bearing arrangement according to claim 8, **characterized in that** at least parts of said first member (10) forming said pockets (42) are formed by sheets of magnetically highly permeable material attached by adhesive coating.

10. The fluid bearing arrangement according to any of the claims 1 to 9, **characterized in that** said first (21) and second (22) sides of said second member (20) are flat.

11. The fluid bearing arrangement according to any of the claims 1 to 10, **characterized by** comprising multiple said second members (20) provided with respective air-gaps relative to said first member (10).

12. An electrical machine (1), **characterized by** a fluid bearing arrangement (9) according to any of the claims 1 to 12, wherein said first member (10) is a non-moving part of said electrical machine (1) and said second member (20) is a moving part of said electrical machine (1).

13. The electrical machine according to claim 12, **characterized in that** said electrical machine (1) is an electrical machine that operates by switching of magnetic flux.

14. A method for manufacturing of a fluid bearing arrangement (9), comprising the steps of:
- forming (S10) a first member (10), a first side (11) of which presenting first side protrusions (13);
wherein said first side protrusions (13) encircles at least a first side first area (15) of said first side (11) of said first member (10) and a first side second area (16) of said first side (11) of said first member (10);
- forming (S20) a second member (20);
- providing (S30) a pressurized-fluid source connection (31);
- providing (S40) a fluid distribution channel network (32);
- placing (S50) said second member (20) allowing said second member (20) to be movable back and/or forth relative to said first member (10) in a predetermined motion direction (40), said predetermined motion direction (40) being a linear or rotating motion direction;
wherein said second member (20) is placed with a first side (11) of said first member (10) facing a first side (21) of said second member (20);
wherein said first side protrusions (13) are placed in a direction towards said first side (21) of said second member (20) defining a distance (d) between said protrusions (13) and said first side (21) of said second member (20) that is smaller than an average distance (D) between said first side (11) of said first member (10) and said first side (21) of said second member (20);
wherein said providing (S40) of a fluid distribution channel network (32) comprises forming connection channels (38) from a common channel to a respective said pocket (42), thereby making said fluid distribution channel (38) configured to connect said pressurized-fluid source connection (31) to a respective pocket (42) in contact with said first side first area (15) and said first side second area (16), defined by said first side protrusions (13);
wherein said providing (S40) of a fluid distribution channel network (32) further comprises forming a respective flow restriction (34) in each connection channel (38) of said connection channels (38);
wherein said forming (S10) of a first member (10) comprises forming of said first side protrusions (13) to give a mean offset of said first side first area (15), in a direction transverse to said predetermined motion direction (40), from a predetermined motion path along said predetermined motion direction (40), that differs from a mean offset of said first side second area (16), in said direction transverse to said predetermined motion direction (40), from said predetermined motion path along said predetermined motion direction (40).

15. The method for manufacturing according to claim 14, **characterized in that** said step of forming (S10) said first member (10) comprises attaching (S12) sheets of magnetically highly permeable material having adhesive coating to form at least parts of said first member (10) forming said pockets (42).
